# EUROPEAN PATENT SPECIFICATION

(11) **EP 1 332 317 B1**
(45) Date of publication and mention of the grant of the patent: **26.01.2005**
(21) Application number: 01992863.9
(22) Date of filing: 06.11.2001
(51) Int. Cl.: F24C 7/06, F24H 3/04

(54) **DOMESTIC HEATING APPLIANCE**
RAUMHEIZGERÄT
APPAREIL DE CHAUFFAGE DOMESTIQUE

(30) Priority: 06.11.2000 FR 0014216
(43) Date of publication of application: 06.08.2003
(73) Proprietor: SHELL INTERNATIONALE RESEARCH MAATSCHAPPIJ B.V., 2596 HR Den Haag (NL)
(72) Inventor: HECQ, Jean-Philippe, F-13340 Rognac (FR); NICOLLE, David, F-13340 Rognac (FR); QUEMIN, Andre, F-27370 Saint-Pierre du Bosguerard (FR)
(86) International application number: PCT/EP2001/013005
(87) International publication number: WO 2002/037030

(56) References cited:
- GB-A- 885 919
- US-A- 5 226 811

## Description

The present invention relates to a domestic heating appliance, of the type having an infrared radiation source and a reflector presenting towards the source a reflective surface for the infrared radiation, able to reflect the infra red radiation in a beam with a given direction and aperture angle to a room to be heated.

Such heating appliances are widespread, in various embodiments which differ technically only through the nature of the infrared radiation source and the form of the reflective surface, determining the aperture of the beam.

In their currently known embodiments, these appliances have the characteristic of providing particularly directive heating, able to heat a given location in a room, for example a location where a person remains static, without substantially heating the remainder of the room. This is because the main heating effect of such appliances is obtained by direct infrared radiation from the source and by reflection of the infrared radiation from the source on the reflective surface of the reflector, and only natural convection of air can provide ambient heating.

They are therefore appreciated when it is a case of obtaining make-up heating, in a localised fashion, for example when it is a case of heating a workstation, but they are unsuitable for providing the heating of a room by themselves, notably by temporarily substituting themselves for main heating.

USA patent specification No. 5 226 811 discloses a domestic heating appliance that provides localized heating as well as heating a whole room.

The known domestic heating appliance comprises:
(a) an infrared radiation source in the form of a liquid fuel burner;
(b) a reflector presenting, towards the source, a reflective surface for the infrared radiation, able to reflect it in a beam with given direction and aperture, towards a room to be heated, which reflector is formed by a wall made from a material which is a good conductor of heat, which wall has a back opposite to the reflective surface;
(c) means for establishing, in contact with the back of the reflector, an air circuit having an air inlet outside the beam and an air outlet directed at least approximately in accordance with the direction of the beam, so as to add an effect of heating by hot air to an effect of heating by infrared radiation, which means for establishing an air circuit include means for delimiting with the back an air guidance channel having a first end and a second end, which first end is in fluid communication with the air outlet.

The heat energy produced by the infrared radiation source is used in two ways which supplement each other, namely in radiation, in order to provide directive heating, that is to say in order to heat a surface rapidly, for example a person, without having to heat the surroundings, and heating by blowing heated air by thermal conduction in contact with the wall forming the reflector, in order to heat the whole of a room whilst providing a pleasant ambient temperature more rapidly than by natural convection.

It is an object of the present invention to improve the known domestic heating appliance.

To this end the domestic heating appliance according to the present invention is characterized in that the means for establishing an air circuit further include a fan having a "suction" side in fluid communication with the air inlet and a "delivery" side in fluid communication with the second end of the channel, and in that the domestic heating appliance further comprises means for establishing fluid communication between the delivery side of the fan and the immediate vicinity of the burner, so as to supply the latter with primary air, at least partially, by means of the fan.

An advantage of the present invention is that the fan used to establish a forced air circulation along the back of the reflector is used for supplying to the burner at least some of the air needed for the combustion. A further advantage is procuring a better rate of ventilation of the burner, which leads to a reduction in CO emissions.

The burner can be a gaseous fuel burner or a liquid fuel burner.

The manufacture of an appliance according to the invention does not give rise to great complications or a high cost, in comparison with the aforementioned known appliances.

Preferably, the channel ascends from its second end towards its first end, which contributes to the establishment of the air circuit, from the inlet towards the outlet, the natural tendency which the heated air in contact with the back of the reflector has to rise. It is thus possible to use a fan of low power and low energy consumption to establish the air circuit. In addition, it is thus possible, without complicating the air circuit and consequently without increasing the pressure drops, to dispose the air outlet above the reflector, which constitutes an optimum position for providing ambient heating, by air blowing, without interfering with the directive heating obtained by radiation.

Here "radiation" means both the radiation coming directly from the source and the radiation which, originating from the source, is sent back by the reflective surface of the reflector.

Positioning the air outlet above the reflector is also favourable to the discharge of fumes emitted by the burner when such a burner constitutes the infrared radiation source.

In general terms, the forced circulation of air at the back of the reflector with a view to heating by blown air makes it possible to improve the heat exchange with the infrared radiation source, that is to say to reduce the power thereof for a given value of the heat energy restored and thus to reduce the quantities of vapour and smoke emitted by the burner.

The burner suitably includes a surface of knitted metallic fibre, for example of the type sold under the name NIT by the company Acotech. The use of such a metallic fibre allows a high surface temperature, which results in an improvement to the quantity of heat emitted by infrared radiation, because the quantity of heat emitted is being proportional to the surface temperature to the power of four. The use of metallic fibres allows different shapes of the burner, for example cylindrical, hemispherical, semicylindrical or conical.

Suitably the fan comprises a turbine mounted so as to rotate, about a given axis, inside a casing defining the suction side and the delivery side.

This allows making a provision for the casing, on the delivery side, to be subdivided into a first and a second conduit that are mutually juxtaposed parallel to the axis of rotation of the turbine, wherein the first conduit has a cross-section greater than that of the second conduit, and wherein the first conduit is in fluid communication with the second end of the channel, in order to provide the circulation of heating air by blown air, and the second conduit is in fluid communication with the immediate vicinity of the burner in order to provide the at least partial supply of primary air to the latter.

Whatever the type of fan used, in a variant it is also possible to use for this purpose a capture of air within the channel, in fluid communication with the immediate vicinity of the burner.

Naturally, in its different versions, the appliance according to the invention can be equipped with any known means for regulating the power of the infrared radiation source, for example a thermomagnetic valve with direct action on the combustion rate by means of a tap or with a thermostatic wheel in the case of a burner, and to ensure safety in functioning, for example in terms of protection against overheating and, in the case of a burner as an infrared radiation source, pilot flame control and atmospheric control by action on the valve. It is also possible to provide various characteristics increasing the ease of use of the appliance, such as an orientable diffuser at the discharge of blown air after heating in contact with the back of the reflector, a geometry of the reflective surface of the latter able to give to the infrared radiation source an appearance close to that of logs, and the arrangement, facing the reflector and the infrared radiation source, of a front face consisting for example of a solid window or in the form of slats, or a grille.

Other characteristics and advantages of an appliance according to the invention will emerge from the following description, relating to non-limitative example embodiments, and the accompanying drawings which form an integral part of this description.
Figure 1 shows a perspective, schematic and exploded view of a first embodiment of a heating appliance according to the invention.
Figure 2 shows, in a view similar to that of Figure 1, a second embodiment of an appliance according to the invention.
Figure 3 shows this second embodiment, in a view similar to that of Figure 2 but in a different direction.
Figures 4 and 5 illustrate a variant of this second embodiment, respectively in an elevation view in a direction marked by an arrow IV in Figure 2 and a front view in a direction marked by V in Figure 4.

In all these figures, the appliance according to the invention is shown without external cladding, it being understood that such a cladding is generally provided for the double reason of aesthetic appearance and protection of the components of the appliance against impacts, and against unwanted dismantling and adjustment.

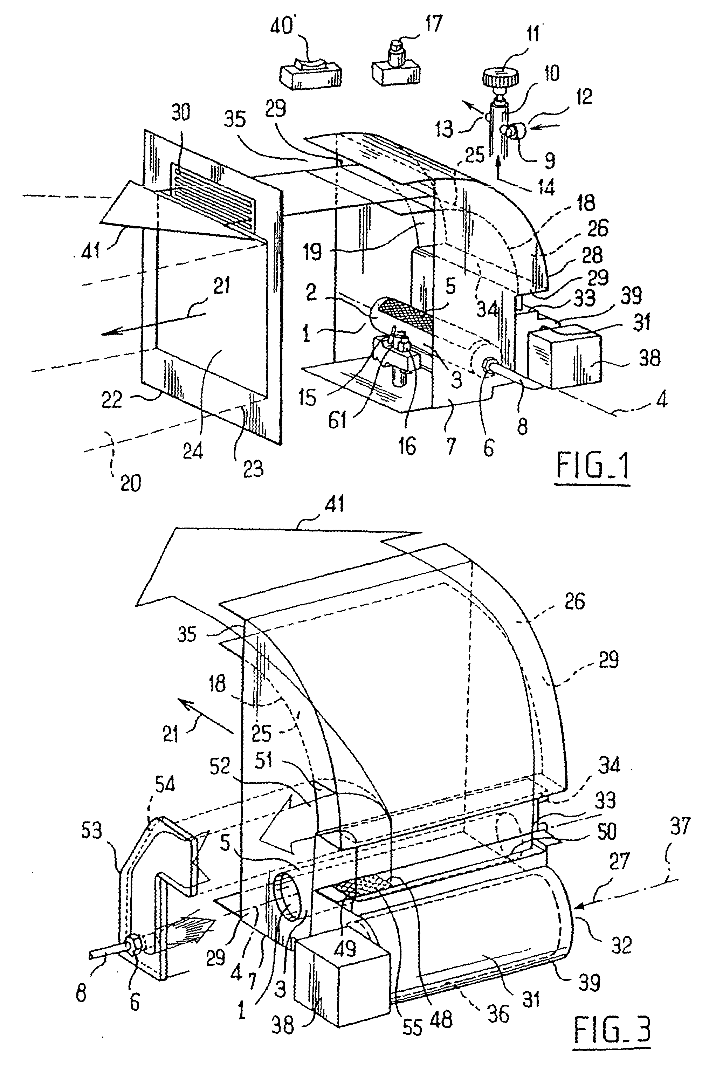

Reference will be made firstly to Figure 1 where, by way of infrared radiation source, a gas burner has been illustrated of the so-called "surface combustion" type having, in a manner known per se, a tubular support 2, with an external peripheral face 3 whose shape is cylindrical formed by rotation about a horizontal axis 4, covered on its top part with a knitted metallic fibre 5, defining a combustion area. The burner 1 also has a gaseous fuel injector 6, disposed inside the support 2 so as to be located in the immediate vicinity of one of the axial ends thereof and carried integrally, like the support 2, by a body 7 of the appliance. The injector 6 is connected by a pipe 8 to a gas outlet 9 of a thermomagnetic valve 10 with a tap 11 for adjusting the power, that is to say the flow of gas from an inlet 12 which the valve 10 has for the gas, coming from a source such as a bottle of liquefied gas or, in the case of a fixed appliance, an urban gas supply system; the valve 10 also has a gas outlet 13 to a pilot light 61 carried integrally by the body 4 in the immediate vicinity of the external peripheral face 3 of the support 2, and a connection 14 with a thermocouple 15 carried integrally by the body 7 of the appliance, in the immediate vicinity of the pilot light 61, in the flame thereof, to provide flame safety and atmospheric safety, that is to say to cut off the gas feed at the valve 10 respectively in the event of extinction of the flame and in the case of air depletion at the pilot light 61. To enable the pilot light 61 to be lit, an electrical spark igniter 16 is provided, also carried by the body 7 in the immediate vicinity of the pilot light 61, this igniter being controlled from a push button 17 placed, like the power adjustment tap 11, available to the user, from the outside of the appliance, through the cladding thereof.

This design of a burner 1 and its accessories is known per se to experts, and naturally the gaseous fuel burner 1 which has just been described could be replaced by any other type of burner, notably a liquid fuel burner, provided with appropriate accessories provided that the burner emits infrared radiation when it is in service.

Also as known per se, the appliance according to the invention, notably in its embodiment in Figure 1, has a reflector 18 which presents, towards the infrared radiation source such as the burner 1, a surface 19 able to reflect the infrared radiation emitted by this source in a beam 20 with given aperture and direction; in the example illustrated, this direction is approximately horizontal and the direction of emission of the beam 20 is designated by 21, which direction 21 will serve hereinafter for the concepts of front and rear and the concepts which are derived therefrom.

An expert can easily determine the conformation of the reflective surface 19, for this purpose. In the example illustrated, the reflective surface 19 has a flat bottom part, vertical and parallel to the axis 4, behind the source 1, and a top part which, from this bottom part, curves progressively forwards, as far as the horizontal, until it is connected to a front face 22, permeable to infrared radiation, which constitutes the cladding of the appliance towards the front. The design of the front face 2 can be chosen freely; in the example illustrated, it has a peripheral part 23 consisting of a grille and a central part 24 consisting of a window enabling the user to see the source, such as the burner 1, whose appearance, somewhat similar to that of a log, also reflected by the surface 19 of the reflector 18, gives an effect close to that of a wood fire. In the example illustrated, the top part of the reflective surface 19 is defined by generator lines parallel to the axis 4, like its bottom part, and has, when it is seen in section through a plane perpendicular to the axis 4, a cross-section approximately in a quarter of a circle, but naturally other conformations of the reflective surface 19, as a whole, could be chosen without for all that departing from the scope of the present invention.

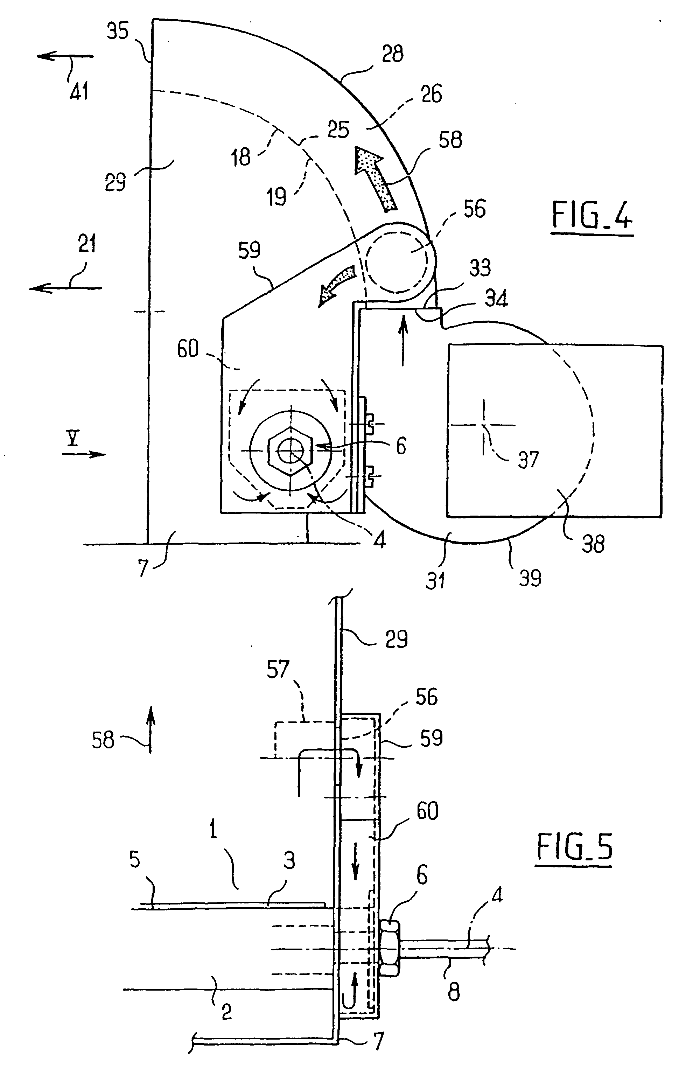

In accordance with the present invention, the reflector 18 is formed by a wall produced from a material having good ability to conduct heat, and has, opposite to the reflective surface 19, a back 25 with which the body 7 defines an open-ended air guidance channel 26 so that the ambient air taken outside the beam 20, at an air inlet which is not visible in Figure 1 but has been shown diagrammatically at 17 in Figure 3, with regard to the second embodiment of the appliance according to the invention, identical in this regard, undergoes heating by thermal conduction whilst circulating along the back 25 before being ejected, in the direction 21 or at least approximately in this direction 21, through the front face 22 in order to supplement, by the blowing of hot air 41, the heating procured by the infrared radiation issuing directly from the source such as the burner 1 or indirectly by reflection on the surface 19, through this front face 22.

More precisely, in the example illustrated, the body 7 delimits the open-ended channel 26, with the back 25, by means of a wall 28 which runs along the top part of the back 25, towards the rear and towards the top, whilst maintaining a constant separation vis-à-vis this back 25, and by means of two flat lateral cheeks 29, perpendicular to the axis 4 and mutually connecting the wall 28 and the back 25; advantageously, these lateral cheeks 29 are extended downwards and forwards with respect to the back 25, in order to integrally carry the support 2 of the burner 1 and the injector 6.

The back 25 of the reflector 18, the wall 28 and the lateral cheeks 29 are impermeable to air so that the channel 26 opens out only downwards, through an open second end 34 situated at the junction between the top and bottom parts of the reflective surface 19, and towards the front, through an open first end 35 situated at the top and front end of the reflective surface 19, that is to say immediately above the beam 20, through a diffuser 30 provided in the front face 22, immediately above the window 24 and immediately in front of the first end 35 of the open-ended channel 26. In a manner which is not depicted but is easily understandable to an expert, this diffuser 30, formed in the example illustrated by horizontal slots placed mutually one above the other, can advantageously be provided with fins with adjustable direction, as is known for example in the case of vents for ventilating the passenger compartments of motor vehicles. The diffuser 30 thus represents the outlet for air heated by thermal conduction in contact with the back 25.

More precisely, the diffuser 30 is the outlet of an air circuit which includes, in addition to the channel 26 inside which the air coming from the inlet 27 (Figure 3) is heated by contact with the back 25 of the reflector 18, a fan 31 having a suction side 32 (also Figure 3), in fluid communication with the air inlet 27 (Figure 3), and a delivery side 33 in fluid communication with the channel 26, at the second end 34 of the channel 26.

In the preferred example illustrated, the fan 31 is chosen from a type known per se, having, as shown in Figure 3, a finned turbine 36 having an axis 37 about which it is driven in rotation by the electric motor 38, inside a casing 39 defining the suction side 32 through an axial hole, not shown, and the delivery side 33 through a peripheral slot parallel to the axis 37.

With a view to its application to an appliance according to the invention, the fan 31 is chosen so that the slot defining the delivery side 33 has a shape and dimensions corresponding to those of the second end 34 of the channel 26 and the turbine 36 has, parallel to the axis 37, dimensions substantially identical to those which the channel 26 has parallel to the axis 4, between the cheeks 29, and the casing 39 is mounted integrally on the body 7, behind the bottom part of the reflective surface 19 and under the second end 34 of the channel 26, so that the axis 37 is directed parallel to the axis 4 and the slot defining the delivery side 33 coincides with the second end 34 of the channel 26.

A stop/start switch 40, accessible from the outside of the cladding of the appliance, enables the user, as required, to start the motor 38 or to stop it, respectively in order to cause, through the first end 35 of the channel 26 and the diffuser 30, a flow of air 41 coming from the air inlet 27 and placed in contact in the back 25 of the reflector 18 inside the guidance channel 26, or to stop this flow of air 41.

The user thus benefits from a possibility of selecting between heating exclusively by infrared radiation, when the motor 38 is stopped, and combined heating by infrared radiation and hot air blowing 41, which affords a solution to the different needs of the user of the appliance.

In a conventional scheme of use, the appliance is first of all used at maximum power to make it possible to heat the user rapidly, the latter orienting the appliance so as to be situated in the beam 20, with blowing of hot air 41 or, preferably, without blowing hot air 41 in order to accelerate the heating up of the reflector 18; next, that is to say once the user has been warmed, it is possible to reduce the power of the source such as the burner 1, by switching on or keeping the fan 31 in service, to profit from the heating by hot air blowing 41. Such a use saves on the energy consumed by the source such as the burner 1 and, where the source consists of such a burner, reduces the quantity of smoke and water vapour emitted during combustion.

The appliance which has just been described with reference to Figure 1 is thus more particularly intended to constitute make-up heating, enabling its user to benefit as required from intensive and directive heating, by use of the infrared radiation alone, or more widespread heating, by the simultaneous use of the infrared radiation.emitted by the source such as the burner 1 and the hot air flow 41.

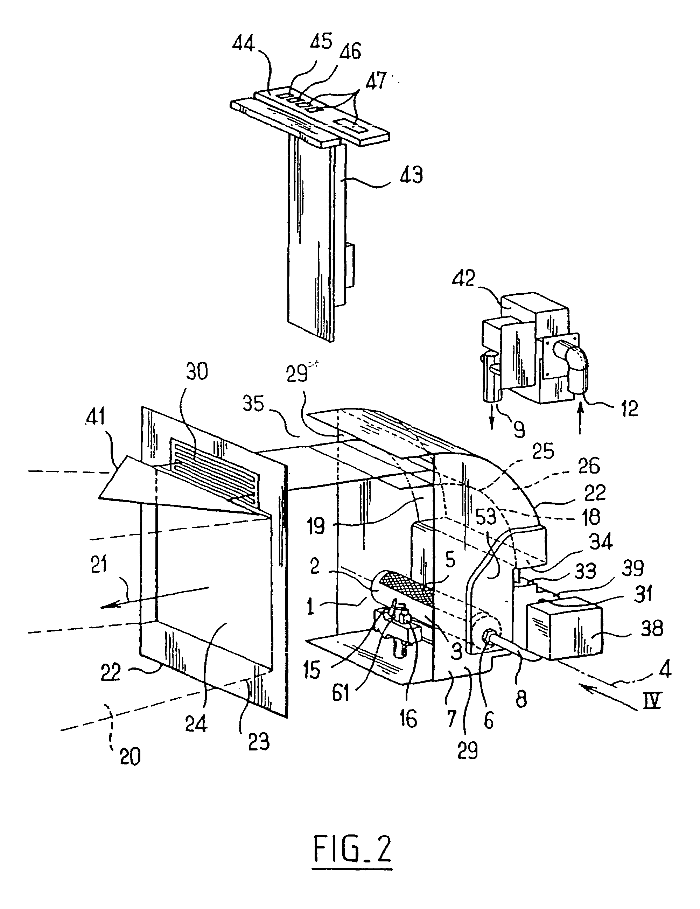

The appliance illustrated in Figures 2 to 5, to which reference is now made, also constitutes make-up heating but, as an expert will easily understand, its design makes it also suitable for being substituted temporarily for main heating.

This is because, unlike the appliance described with reference to Figure 1, this appliance is designed to continuously combine heating by infrared radiation and heating by hot air blowing, and has, in place of the electromagnetic valve 10, a modulating solenoid valve 42 acting between the gas inlet 12 and the gas outlet 9 to the injector 6 in a manner which is controlled, by means of an electronic management card 43, from a control fascia 44 making available to the user a stop/start button 45 and a temperature adjustment wheel 46, as well as various control lights 47, in replacement for the tap 11 and control buttons 17 and 40 of the appliance described with reference to Figure 1.

There are also found, in the embodiment of the appliance according to the invention which is illustrated in Figures 2 to 5, all the elements described with reference to Figure 1, and these elements have been allocated the same numerical references.

The appliance illustrated in Figures 2 to 5 does however have, as an additional characteristic, compared with the appliance illustrated in Figure 1, the fact that the air delivered by the fan 31 is not used in its entirety, but only for its major part, for the purpose of providing the hot air flow 41 by means of the channel 26.

This is because a minor part of the air thus delivered by the fan 31 is used as an addition to primary air for the burner 1.

Figures 2 and 3 on the one hand and 4 and 5 on the other hand illustrate, by way of non-limitative examples, two ways of providing this sampling of some of the air delivered by the fan 31.

In the example illustrated in Figures 2 and 3, the outlet side 33 of the casing 39 of the fan 31 is subdivided by a flat partition 48, perpendicular to the axis 37, into two conduits 49 and 50 mutually juxtaposed parallel to the axis 37 in order to correspond to a respective part of the turbine 36.

More precisely, the partition 48 is disposed, parallel to the axes 37 and 4, closer to the cheek 29 of the body 7 carrying the injector 6 than the other cheek 29, so as to subdivide the outlet 33 unequally so that the second conduit 49, situated on the side of the partition 48 corresponding to the cheek 29 carrying the injector 6, has a cross-section of flow less than that of the first conduit 50; by way of non-limitative example, good results to the tests were obtained by placing the partition 48 so that the second conduit 49 has a cross-section of flow of around one third to one quarter of the total cross-section of flow of the outlet 33.

The first conduit 50 offering the greatest cross-section of flow communicates with the second end 34 of the open-ended channel 26 so as to supply the latter with air coming from the fan 31 for the purpose of providing a hot air flow 41 under the conditions described with regard to Figure 1.

The second conduit 49 for its part opens out inside the channel 26 onto a conduit 51 angled at 90° so as to be connected to a hole 52 provided in the cheek 29 carrying the injector 6 and to divert towards this hole 52 the air coming from the conduit 49. On the same cheek 29 there is integrally mounted a cover 53 common to an area surrounding the injector 6 and delimiting with the cheek 29 a sealed conduit 54 for the return of air from the hole 52 to a limited area of the burner 1 around the injector 6 which, in this way, is at least partially supplied with primary air from the conduit 49 on the outlet side 33 of the fan 31, by means of the angled conduit 51, the hole 52 and the conduit 54.

Advantageously, the conduit 49 is provided internally with means 55, such as a ceramic partition permeable to air, in order to obtain a rotationless flow to the angled conduit 51.

The taking off of at least some of the primary air coming from the delivery side 33 of the fan 31 can also be offset, inside the channel 26, with respect to this delivery side 33 and be produced in the form of a capture of some of the air passing through the channel 26.

Figures 4 and 5 illustrate such an embodiment, which entails neither the presence of a partition 48 nor the presence of means 55 intended to prevent a rotation of the flow of primary air to the injector, all the delivery side 33 of the fan 31 communicating with the second end 34 of the channel 26.

In this case, a hole 56 similar to the hole 52 but offset with respect to it along the channel 26 is arranged in the cheek 29 carrying the injector 6, but this hole 56 is not connected to the delivery side 33 of the fan 31 by an angled conduit similar to the conduit 51; it is nevertheless possible to provide, inside the channel 26, over a minimal part of the dimension thereof parallel to the axes 37 and 4, a deflector 57 placed immediately downstream of the hole 56 with reference to a direction 58 of travel through the channel 26 by the air, from the second end 34 towards the first end 35, in order to force some of the air circulating in the channel 26 to be routed through the hole 56.

In this case also, a cover 59, in every respect similar to the cover 53, is fixed to the cheek 29 carrying the injector 6 so as to delimit with this cheek 29 a sealed conduit 60 which puts an area of the burner 1 surrounding the injector 6 in fluid communication with the hole 56.

Naturally, in addition to the characteristic provisions of the present invention, the heating appliance which has just been described with reference to Figures 2 to 5, like the heating appliance described with reference to Figure 1, can have any additional provision known per se, notably according to the infrared radiation source used.

In the specific case of the appliance described with reference to Figures 2 to 5, the electronic card 43 is advantageously designed, which comes within the scope of the normal abilities of an expert, so as to manage all safety measures, namely against overheating, the consequences of flame extinction, and atmosphere control, by action on the solenoid valve 42, and in order to control the ignition sequence for the appliance, including pre-ventilation, verification of the temperature levels and the speed of rotation of the rotor 36 of the fan 31, and finally the ignition of the burner 1 by spark igniter, the user merely having to press on the stop/start button 45 provided on the control fascia 44, and to set the required temperature by means of the wheel 46; moreover, in addition to or in replacement for the control fascia 44, a remote control could be provided for the stop/start functions and the temperature setting functions as well as, where necessary, for adjusting the direction of the fins of the diffuser 30 when the latter has fins adjustable for direction, in a manner which is not illustrated but easily understandable to an expert.

## Claims

1. Domestic heating appliance comprising:
(a) an infrared radiation source (1) in the form of a burner;
(b) a reflector (18) presenting, towards the source (1), a reflective surface (19) for the infrared radiation, able to reflect it in a beam (20) with given direction (21) and aperture, towards a room to be heated, which reflector (18) is formed by a wall made from a material which is a good conductor of heat, which wall has a back (25) opposite to the reflective surface (19);
(c) means (28, 29, 30, 31) for establishing, in contact with the back (25) of the reflector (18), an air circuit having an air inlet (27) outside the beam (20) and an air outlet (30) directed at least approximately in accordance with the direction (21) of the beam (20), so as to add an effect of heating by hot air to an effect of heating by infrared radiation, which means (28, 29, 30, 31) for establishing an air circuit include means (28, 29) for delimiting with the back (25) an air guidance channel (26) having a first end (35) and a second end (34), which first (35) end is in fluid communication with the air outlet (30),
**characterized in that** the means (28, 29, 30, 31) for establishing an air circuit further include a fan (31) having a "suction" side (32) in fluid communication with the air inlet (27) and a "delivery" side (33) in fluid communication with the second end (34) of the channel (26), and **in that** the domestic heating appliance further comprises means (51, 52, 53, 54, 56, 57, 59, 60) for establishing fluid communication between the delivery side (33) of the fan (31) and the immediate vicinity of the burner (1), so as to supply the latter with primary air, at least partially, by means of the fan (31).

2. Domestic heating appliance according to claim 1, **characterised in that** the channel (26) is ascending from its second end (34) towards its first end (35).

3. Domestic heating appliance according to claim 2, **characterised in that** the air outlet (30) is disposed above the reflector (18).

4. Domestic heating appliance according to any one of the claims 1 to 3, **characterised in that** the fan (31) comprises a turbine (36) mounted so as to rotate, about a given axis (37), inside a casing (39) defining the suction side (32) and the delivery side (33).

5. Domestic heating appliance according to claim 4, **characterised in that** the casing (39), on the delivery side, is subdivided into a first conduit (50) and a second conduit (49) mutually juxtaposed parallel to the axis (37) of rotation of the turbine (36), wherein the first conduit (50) has a cross-section greater than that of the second conduit (49), and wherein the first conduit (50) is in fluid communication with the second end (34) of the channel (26) and the second conduit (49) is in fluid communication with the immediate vicinity of the burner (1).

6. Domestic heating appliance according to any one of the claims 1 to 5, **characterised in that** it has an air pick-up (56, 57) inside the channel (26), in fluid communication with the immediate vicinity of the burner (1).

## Patentansprüche

1. Raumheizgerät umfassend:
(a) eine Infrarot-Strahlungsquelle (1) in Form eines Brenners;
(b) einen Reflektor (18), welcher eine der Quelle (1) zugekehrte reflektierende Oberfläche (19) für Infrarotstrahlung aufweist, die befähigt ist, diese in einem Strahl (20) mit gegebener Richtung (21) und Öffnungsweite gegen einen zu heizenden Raum zu richten, wobei der Reflektor (18) durch eine Wand aus einem Material geformt ist, das ein guter Wärmeleiter ist, wobei die Wand auf der der reflektierenden Oberfläche (19) entgegengesetzten Seite einen Rücken (25) aufweist;
(b) Mittel (28, 29, 30, 31) zum Herstellen eines Luftkreises in Kontakt mit dem Rücken (25) des Reflektors (18), mit einem Lufteinlaß (27) außerhalb des Strahles (20) und einem Luftauslaß (30), der zumindest angenähert in der Richtung (21) des Strahles (20) gerichtet ist, um einen Heizeffekt durch Heißluft zusätzlich zum Heizeffekt durch Infrarotstrahlung zu erzeugen, wobei die Mittel (28, 29, 30, 31) zur Herstelling eines Luftkreises Mittel (28, 29) zum Begrenzen eines Luftführungskanals mit dem Rücken (25) aufweisen, der ein erstes Ende (35) und ein zweites Ende (34) hat, wobei das erste Ende (35) in Fluidverbindung mit dem Luftauslaß (30) steht;
**dadurch gekennzeichnet, daß** die Mittel (28, 29, 30, 31) zur Herstelling eines Luftkreises ferner ein Gebläse (31) mit einer "Saugseite" (32) in Fluidverbindung mit dem Lufteinlaß (27) und einer "Abgabeseite" (33) in Fluidverbindung mit dem zweiten Ende (34) des Kanals (26) aufweisen, und daß das Raumheizgerät ferner Mittel (51, 52, 53, 54, 56, 57, 59, 60) zur Erzeugung einer Fluidverbindung zwischen der Abgabeseite (33) des Gebläses (31) und der unmittelbaren Nähe des Brenners (1) aufweisen, um diesen zumindest teilweise mit Primärluft durch das Gebläse (31) zu versorgen.

2. Raumheizgerät nach Anspruch 1, **dadurch gekennzeichnet, daß** der Kanal (26) von seinem zweiten Ende (34) gegen sein erstes Ende (35) aufsteigt.

3. Raumheizgerät nach Anspruch 2, **dadurch gekennzeichnet, daß** der Luftauslaß (30) oberhalb des Reflektors (18) angeordnet ist.

4. Raumheizgerät nach einem der Ansprüche 1 bis 3, **dadurch gekennzeichnet, daß** das Gebläse (31) eine Turbine (36) aufweist, die so montiert ist, daß sie um eine gegebene Achse (37) innerhalb eines Gehäuses (39) rotiert, welches die Saugseite (32) und die Abgabeseite (33) definiert.

5. Raumheizgerät nach Anspruch 4, **dadurch gekennzeichnet, daß** das Gehäuse (39) auf der Abgabeseite in eine erste Leitung (50) und eine zweite Leitung (49) unterteilt ist, die nebeneinander parallel zur Drehachse (37) der Turbine (36) liegen, wobei die erste Leitung (50) einen Querschnitt hat, der größer ist als jener der zweiten Leitung (49), und wobei die erste Leitung (50) in Fluidverbindung mit dem zweiten Ende (34) des Kanals (26) steht, und die zweite Leitung (49) in Fluidverbindung mit der unmittelbaren Nähe des Brenners (1) steht.

6. Raumheizgerät nach einem der Ansprüche 1 bis 5, **dadurch gekennzeichnet, daß** es eine Luftaufnahme (56, 57) innerhalb des Kanals (26) aufweist, die in Fluidverbindung mit der unmittelbaren Nähe des Brenners (1) steht.

## Revendications

1. Appareil de chauffage domestique comprenant :
(a) une source de rayonnement infrarouge (1) sous la forme d'un brûleur;
(b) un réflecteur (18) présentant, vers la source (1), une surface réfléchissante (19) pour le rayonnement infrarouge, pouvant le réfléchir sous la forme d'un faisceau (20) de direction (21) et d'angle d'ouverture donnés vers une pièce à chauffer, lequel réflecteur (18) est formé d'une paroi fabriquée dans un matériau qui est un bon conducteur de la chaleur, ladite paroi ayant un dos (25) opposé à la surface réfléchissante (19);
(c) des moyens (28, 29, 30, 31) pour établir, en contact avec le dos (25) du réflecteur (18), un circuit d'air ayant une entrée d'air (27) hors du faisceau (20) et une sortie d'air (30) dirigée au moins à peu près selon la direction (21) du faisceau (20) de façon à ajouter un effet de chauffage par air chaud à un effet de chauffage par rayonnement infrarouge, lesquels moyens (28, 29, 30, 31) d'établissement d'un circuit d'air comprennent des moyens (28, 29) pour délimiter avec le dos (25) un canal de guidage d'air (26) ayant une première extrémité (35) et une seconde extrémité (34), laquelle première extrémité (35) est en communication de fluide avec la sortie d'air (30),
**caractérisé en ce que** les moyens (28, 29, 30, 31) d'établissement d'un circuit d'air comprennent en outre un ventilateur (31) ayant un côté d'"aspiration" (32) en communication de fluide avec l'entrée d'air (27) et un côté de "délivrance" (33) en communication de fluide avec la seconde extrémité (34) du canal (26), et **en ce que** l'appareil de chauffage domestique comprend en outre des moyens (51, 52, 53, 54, 55, 56, 57, 59, 60) pour établir une communication de fluide entre le côté de délivrance (33) du ventilateur (31) et le voisinage immédiat du brûleur (1) de façon à alimenter ce dernier en air, au moins partiellement, au moyen du ventilateur (31).

2. Appareil de chauffage domestique selon la revendication 1, **caractérisé en ce que** le canal (26) monte de sa seconde extrémité (34) vers sa première extrémité (35).

3. Appareil de chauffage domestique selon la revendication 2, **caractérisé en ce que** la sortie d'air (30) est disposée au-dessus du réflecteur (18).

4. Appareil de chauffage domestique selon l'une quelconque des revendications 1 à 3, **caractérisé en ce que** le ventilateur (31) comprend une turbine (36) montée à rotation autour d'un axe donné (37), à l'intérieur d'une enceinte (39) définissant le côté d'aspiration (32) et le côté de délivrance (33).

5. Appareil de chauffage domestique selon la revendication 4, **caractérisé en ce que** l'enceinte (39) sur le côté de délivrance est subdivisée en un premier conduit (50) et un second conduit (49) mutuellement juxtaposés parallèlement à l'axe de rotation (37) de la turbine (36), où le premier conduit (50) présente une coupe transversale supérieure à celle du second conduit (49) et où le premier conduit (50) est en communication de fluide avec le voisinage immédiat du brûleur (1).

6. Appareil de chauffage domestique selon l'une quelconque des revendications 1 à 5, **caractérisé en ce qu'**il a une capture d'air (56, 57) à l'intérieur du canal (26) en communication de fluide avec le voisinage immédiat du brûleur (1).
